# EUROPEAN PATENT SPECIFICATION

(11) **EP 4 644 670 B1**
(45) Date of publication and mention of the grant of the patent: **11.11.2026**
(21) Application number: 25174076.7
(22) Date of filing: 02.05.2025
(51) Int. Cl.: F01D 25/18, F01M 11/06

(54) **OIL FEED MANAGEMENT SYSTEM**
ÖLZUFUHRVERWALTUNGSSYSTEM
SYSTÈME DE GESTION D'ALIMENTATION EN HUILE

(30) Priority: 02.05.2024 US 202418653428
(43) Date of publication of application: 05.11.2025
(73) Proprietor: PRATT & WHITNEY CANADA CORP., Longueuil, Québec J4G 1A1 (CA)
(72) Inventor: DESJARDINS, Michel, (01BE5) Longueuil, J4G 1A1 (CA)
(74) Representative: Dehns

(56) References cited:
- DE-A1- 102016 106 911
- FR-A1- 2 621 562
- US-A- 2 983 331
- US-A- 3 612 083

## Description

### BACKGROUND

Exemplary embodiments pertain to the art of gas turbine engines, such as those utilized in aircraft. Aircraft engines can be designed with propeller blades capable of operating with a variable pitch, referred to as propeller blade angle.

Aircraft engines include a reduction gearbox (RGB) which provides the necessary speed ratio from the power turbine shaft to the output shaft (driving the propeller) while carrying the resulting torque. It may also support the propeller shaft 1P moment loads and oil transfer for the propeller pitch actuation. The RGB oil feed system provides the oil flow to the various rolling element bearings and gears. The RGB may also include an auxiliary tank which maintains an oil volume which is used by the feathering pump to guarantee an appropriate amount of oil for a given number of prop pitch excursions from min to max pitch, even if there's no oil feed from the engine main pump, such as on engine shut down (e.g. ground testing). In normal operation, oil feeds, if present, the auxiliary tank at its top portion. Once the tank is filled, the pressurized oil feeds the downstream components, such as gears & bearings via the top portion of the auxiliary tank. This allows the auxiliary tank to stay full, leaving this volume available when the auxiliary pump is used. The feathering pump oil flow pick-up is located at a vertical bottom of the auxiliary tank. The patent application FR2621562 discloses a lubrication system of a gas turbine engine to ensure proper suction of the pump under all operating conditions, particularly during negative-g flight.

### BRIEF DESCRIPTION

In one exemplary embodiment, a lubrication system of a gas turbine engine includes a lubricant reservoir including a housing having a volume of oil located therein. A reservoir passage extends through the housing from a first housing wall to a second housing wall opposite the first housing wall. One or more side passages extend from the reservoir passage into an interior of the housing and are configured to selectably fill or drain the volume of oil. An output passage is separate and distinct from the reservoir passage, and a separator wall extends into the interior of the housing from the first housing wall toward the second housing wall and between the reservoir passage and the output passage. When the lubricant reservoir is in a first normal operating orientation, the lubricant reservoir is filled via oil flowed through the reservoir passage from the first housing end, and when operated in a negative G orientation, the lubricant reservoir is drained via oil flowed through the reservoir passage and out of the second housing end.

In a further embodiment of the previous embodiment, when the lubricant reservoir is in the second orientation the flow of oil out of the lubricant reservoir via the output passage is stopped.

In a further embodiment of any of the previous embodiments, the one or more side passages is at least two side passages, and a first side passage of the at least two side passages has a first cross-sectional area greater than a second cross-sectional area of a second side passage of the at least two side passages.

In a further embodiment of any of the previous embodiments, the output passage extends from a side wall of the housing between the first housing wall and the second housing wall.

In a further embodiment of any of the previous embodiments, a feathering passage extends into the lubricant reservoir.

In a further embodiment of any of the previous embodiments, a feathering pump is operably connected to the feathering passage to urge oil from the lubricant reservoir via the feathering passage.

In a further embodiment of any of the previous embodiments, is operably connected to the reservoir passage to urge flow through the reservoir passage.

In another exemplary embodiment, a reduction gear box system of a gas turbine engine includes a reduction gear box having one or more journal bearings therein, and a lubricant reservoir configured to provide a flow of oil to the reduction gearbox. The lubricant reservoir includes a housing, a volume of oil located in the housing, and a reservoir passage extending through the housing from a first housing wall to a second housing wall opposite the first housing wall. The reservoir passage is configured to provide the flow of oil to the one or more journal bearings. One or more side passages extend from the reservoir passage into an interior of the housing and are configured to selectably fill or drain the volume of oil. An output passage extends from the housing separate and distinct from the reservoir passage, and a separator wall extends into the interior of the housing from the first housing wall toward the second housing wall and between the reservoir passage and the output passage. When the lubricant reservoir is in a first orientation, the lubricant reservoir is filled via oil flowed through the reservoir passage from the first housing end, and when operated in a negative G orientation, the lubricant reservoir is drained via oil flowed through the reservoir passage and out of the second housing end.

In a further embodiment of any of the previous embodiments, when the lubricant reservoir is in the second orientation the flow of oil out of the lubricant reservoir via the output passage is stopped.

In a further embodiment of any of the previous embodiments, the one or more side passages is at least two side passages, and a first side passage of the at least two side passages has a first cross-sectional area greater than a second cross-sectional area of a second side passage of the at least two side passages.

In a further embodiment of any of the previous embodiments, the output passage extends from a side wall of the housing between the first housing wall and the second housing wall.

In a further embodiment of any of the previous embodiments, a feathering passage extending into the lubricant reservoir.

In a further embodiment of any of the previous embodiments, a feathering pump is operably connected to the feathering passage to urge oil from the lubricant reservoir via the feathering passage.

In a further embodiment of any of the previous embodiments, a main pump is operably connected to the reservoir passage to urge flow through the reservoir passage.

In yet another exemplary embodiment, a gas turbine engine includes a turbine shaft, and a propeller including a plurality of propeller blades; the propeller driven by a propeller shaft. A reduction gear box operably connects the turbine shaft to the propeller shaft. A lubricant reservoir is configured to provide a flow of oil to the reduction gearbox. The lubricant reservoir includes a housing, a volume of oil located in the housing, and a reservoir passage extending through the housing from a first housing wall to a second housing wall opposite the first housing wall. The reservoir passage is configured to provide the flow of oil to the one or more journal bearings of the reduction gear box. One or more side passages extend from the reservoir passage into an interior of the housing configured to selectably fill or drain the volume of oil, and an output passage extends from the housing separate and distinct from the reservoir passage. A separator wall extends into the interior of the housing from the first housing wall toward the second housing wall and between the reservoir passage and the output passage. When the lubricant reservoir is in a first orientation, the lubricant reservoir is filled via oil flowed through the reservoir passage from the first housing end, and when operated in a negative G orientation, the lubricant reservoir is drained via oil flowed through the reservoir passage and out of the second housing end.

In a further embodiment of any of the previous embodiments, when the lubricant reservoir is in the second orientation the flow of oil out of the lubricant reservoir via the output passage is stopped.

In a further embodiment of any of the previous embodiments, the one or more side passages is at least two side passages, and a first side passage of the at least two side passages has a first cross-sectional area greater than a second cross-sectional area of a second side passage of the at least two side passages.

In a further embodiment of any of the previous embodiments, the output passage extends from a side wall of the housing between the first housing wall and the second housing wall.

In a further embodiment of any of the previous embodiments, a feathering passage extends into the lubricant reservoir. The feathering passage is configured to deliver a flow of oil for adjustment of a rotational position of the plurality of propeller blades.

In a further embodiment of any of the previous embodiments, a main pump further includes a main pump operably connected to the reservoir passage to urge flow through the reservoir passage.

### BRIEF DESCRIPTION OF THE DRAWINGS

The following descriptions should not be considered limiting in any way. With reference to the accompanying drawings, like elements are numbered alike:
FIG. 1 is a partial cross-sectional view of and embodiment of a gas turbine engine;
FIG. 2 is a schematic illustration of an embodiment of an oil reservoir of a gas turbine engine under normal operating conditions; and
FIG. 3 is a schematic illustration of an embodiment of an oil reservoir of a gas turbine engine under a negative G operating condition.

### DETAILED DESCRIPTION

A detailed description of one or more embodiments of the disclosed apparatus and method are presented herein by way of exemplification and not limitation with reference to the Figures.

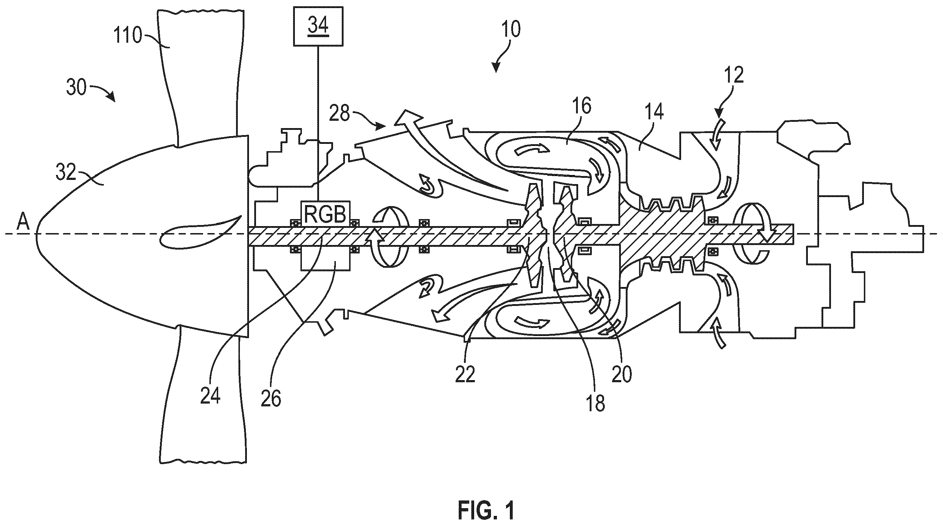

With reference now to FIG. 1, a gas turbine engine 10 is illustrated according to a non-limiting embodiment. The gas turbine engine includes an inlet 12, through which ambient air is directed, a compressor section 14 for pressurizing the air, a combustor 16 in which the compressed air is mixed with fuel and ignited for generating an annular stream of hot combustion gases, and a turbine section 18 for extracting energy from the combustion gases. The turbine section 18 illustratively comprises a compressor turbine 20, which drives the compressor assembly and accessories, and at least one power or free turbine 22, which is independent from the compressor turbine 20 and rotatably drives a rotor shaft 24 about a longitudinal propeller shaft axis (A) through a reduction gear box 26. Hot gases may then be evacuated through exhaust stubs 28.

The engine 10 is coupled to a propeller 30. The propeller 30 includes a plurality of circumferentially-arranged blades 110 disposed on a hub 32 and which extend radially therefrom. Each of the blades 110 are rotatable about their own radial axes through a plurality of blade angles, which can be adjusted to achieve modes of operation, such as feather, full reverse, and forward thrust.

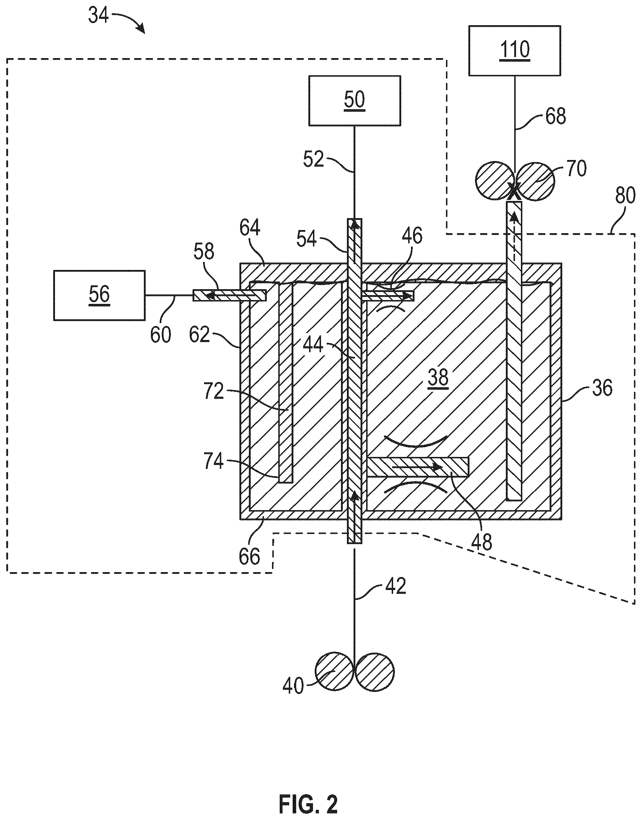

The reduction gear box 26 includes a gear box housing 80 containing gears and nozzles 56 for operation of the reduction gear box 26 and also an oil reservoir 34 to provide oil flow to the gears and bearings 56, and to the blades 110 for feathering actuation of the blades 110. An embodiment of the oil reservoir 34 is illustrated in greater detail in FIG. 2. The oil reservoir 34 includes a reservoir housing 36 and a volume of oil 38 disposed in the reservoir housing 36. A gearbox passage 40 directs oil from the main oil pump 42 to the oil reservoir 34. In some embodiments, the main oil pump 42 is located remotely outside of the gear box housing 80. In a normal operating orientation, as illustrated in FIG. 2, the gearbox passage 40 is coupled to the reservoir housing 36 at a vertical bottom of the reservoir housing 36 such that the oil flow from the main oil pump 42 enters the reservoir housing 36 from the bottom. A housing passage 44 extends through the reservoir housing 36 from bottom to top and includes a first side passage 46 and a second side passage 48 extending from the housing passage 44. The side passages 46, 48 are orifice-controlled and open to the interior of the reservoir housing 36.

The oil reservoir 34 is utilized to provide oil to various components. In some embodiments, the reduction gearbox 26 utilizes oil film journal bearings for compactness. While beneficial economically and for power/density, oil film journal bearings remain sensitive to conditions of oil starvation, such as during negative G or during windmilling condition. For transient, short duration conditions, journal bearings can be fed with little amount of oil, just to sustain the film thickness, provided the heat generation remains below an acceptable range. This is opposed to the rolling element bearings, which can better resist to an oil out condition.

The oil reservoir 34 is therefore configured to maintain necessary oil flow to the journal bearings 50 via a journal bearing passage 52 extending from a journal bearing feed port 54 located, during normal operating conditions at a top of the reservoir housing 36, opposite the gearbox passage 40. The oil reservoir 34 provides oil to the gears and nozzles via outlet port 58 and output passage 60. The outlet port 58 is located in a side wall 62 of the reservoir housing 36. In some embodiments, the outlet port 58 is located in the side wall 62 nearer a top wall 64 than a bottom wall 66 of the reservoir housing 36. In some embodiments, a feathering passage 68 may extend from the oil reservoir 34 to direct oil toward the blades 110 via a feathering pump 70. The feathering passage 68 extends through the reservoir housing 36 into the interior thereof, and in normal orientation is fed from near the vertical bottom of the reservoir housing 36. The reservoir housing 36 further includes a separator wall 72 in the interior of the reservoir housing 36, which extends from the top wall 64 toward the bottom wall 66, without intersecting the bottom wall 66.

During normal operation of the gas turbine engine 10, oil flow is split between directing oil to fill the oil reservoir 34 via the first side passage 46 and the second side passage 48, toward the journal bearings 50 via the journal bearing passage 52, and toward the additional components 56 via the output passage 60. Since the bearing passage 52 is an extension of the housing passage 44, this less restrictive path prioritizes oil flow toward the journal bearings 50 to ensure their adequate lubrication. Secondarily, oil fills the oil reservoir 34 via the side passages 46, 48. Once the oil reservoir 34 is filled, pressurized oil will be pushed through the output passage 60.

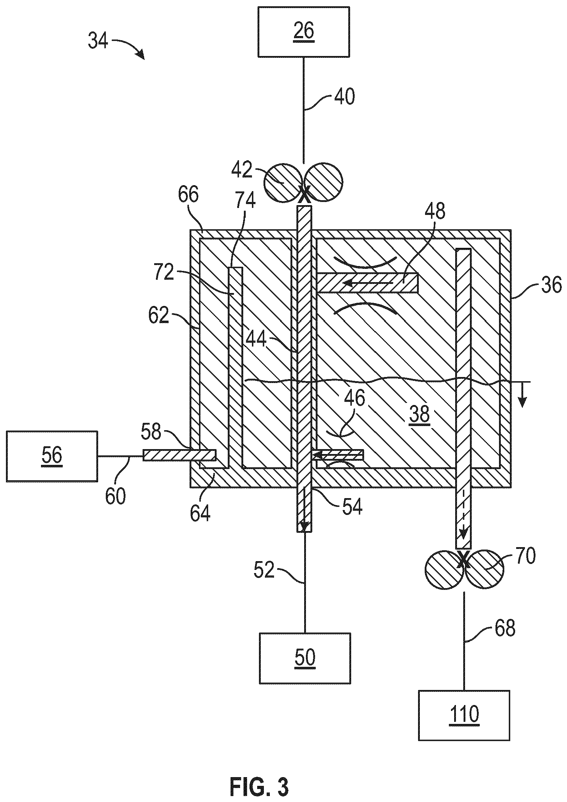

Referring now to FIG. 3, in some conditions, the gas turbine engine 10 and the oil reservoir 34 operate in a negative G condition, where gravity is reversed, which is illustrated herein by inverting FIG. 3 relative to FIG. 2. Under such conditions, no or very low oil pressure is brought into the oil reservoir 34 via the gearbox passage 40. Because of this, oil is directed from the oil reservoir 34 via the side passage 48 and along the housing passage 44 to exit via the journal bearing passage 52. Once the oil level in the oil reservoir 34 reaches a wall end 74 of the separator wall 72, the flow of oil through the output passage 60 is automatically stopped, thus prioritizing the lubrication of the journal bearings 50. Once the oil level is below the side passage 48, the oil then will continue to flow from the side passage 46, which may have a smaller cross-sectional flow area than the side passage 48. The cross-sectional flow area of the side passage 46 is sized to drain the oil reservoir 34 in a preselected duration of time, which may correspond to a maximum design time for a negative G operating condition.

This oil reservoir 34 configuration allows for the use of journal bearings 50 in the reduction gear box 26 by providing for necessary lubrication of the journal bearings during negative G operations. The journal bearings are relatively compact, thus allowing for a reduction in volume of the reduction gear box 26.

The term "about" is intended to include the degree of error associated with measurement of the particular quantity based upon the equipment available at the time of filing the application.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made and equivalents may be substituted for elements thereof without departing from the scope of the present disclosure. In addition, many modifications may be made to adapt a particular situation or material to the teachings of the present disclosure without departing from the essential scope thereof. Therefore, it is intended that the present disclosure not be limited to the particular embodiment disclosed as the best mode contemplated for carrying out this present disclosure, but that the present disclosure will include all embodiments falling within the scope of the claims.

## Claims

1. A lubrication system of a gas turbine engine (10), comprising:
a lubricant reservoir (34) including a housing (36) having a volume of oil (38) disposed therein;
a reservoir passage (44) extending through the housing (36) from a first housing wall (64) to a second housing wall (66) opposite the first housing wall (64);
one or more side passages (46, 48) extending from the reservoir passage (44) into an interior of the housing (36) configured to selectably fill or drain the volume of oil (38);
an output passage (60) separate and distinct from the reservoir passage (44); and
a separator wall (72) extending into the interior of the housing (36) from the first housing wall (64) toward the second housing wall (66) and between the reservoir passage (44) and the output passage (60);
wherein when the lubricant reservoir (34) is in a first normal operating orientation, the lubricant reservoir (34) is filled via oil flowed through the reservoir passage (44) from a first housing end; and
wherein when operated in a negative G orientation, the lubricant reservoir (34) is drained via oil flowed through the reservoir passage (44) and out of a second housing end.

2. The lubrication system of claim 1, wherein when the lubricant reservoir (34) is in the second orientation the flow of oil (38) out of the lubricant reservoir (34) via the output passage (60) is stopped.

3. The lubrication system of claim 1 or 2, wherein the one or more side passages (46, 48) is at least two side passages, and
a first side passage (46) of the at least two side passages has a first cross-sectional area greater than a second cross-sectional area of a second side passage (48) of the at least two side passages.

4. The lubrication system of claim 1, 2 or 3, wherein the output passage (60) extends from a side wall (62) of the housing (36) between the first housing wall (64) and the second housing wall (66).

5. The lubrication system of any preceding claim, further comprising a feathering passage (68) extending into the lubricant reservoir (34).

6. The lubrication system of claim 5, further comprising a feathering pump (70) operably connected to the feathering passage (68) to urge oil (38) from the lubricant reservoir (34) via the feathering passage (68).

7. The lubrication system of any preceding claim, further comprising a main pump (42) operably connected to the reservoir passage (44) to urge flow through the reservoir passage (44).

8. A reduction gear box system of a gas turbine engine (10), comprising:
a reduction gear box having one or more journal bearings (50) therein; and
the lubrication system of any preceding claim, the lubricant reservoir (34) configured to provide a flow of oil (38) to the reduction gearbox (26), the reservoir passage (44) configured to provide the flow of oil (38) to the one or more journal bearings (50), and the output passage (60) extending from the housing (36) separate and distinct from the reservoir passage (44).

9. A gas turbine engine (10), comprising:
a turbine shaft;
a propeller (30) including a plurality of propeller blades (110), the propeller (30) driven by a propeller shaft;
a reduction gear box (26) operably connecting the turbine shaft to the propeller shaft;
the lubrication system of any of claims 1 to 7, the lubricant reservoir (34) configured to provide a flow of oil (38) to the reduction gearbox (26), the reservoir passage (44) configured to provide the flow of oil (38) to one or more journal bearings (50) of the reduction gear box (26), and the output passage (60) extending from the housing (36) separate and distinct from the reservoir passage (44).

10. The gas turbine engine (10) of claim 9, further comprising a feathering passage (68) extending into the lubricant reservoir (34), the feathering passage (68) configured to deliver a flow of oil (38) for adjustment of a rotational position of the plurality of propeller blades (110).

## Patentansprüche

1. Schmiersystem eines Gasturbinentriebwerks (10), umfassend:
einen Schmierstoffbehälter (34), der ein Gehäuse (36) umfasst, in dem ein Ölvolumen (38) angeordnet ist;
einen Behälterdurchgang (44), der sich durch das Gehäuse (36) von einer ersten Gehäusewand (64) zu einer zweiten Gehäusewand (66) gegenüber der ersten Gehäusewand (64) erstreckt;
einen oder mehrere Seitendurchgänge (46, 48), die sich von dem Behälterdurchgang (44) in ein Inneres des Gehäuses (36) erstrecken, das dazu ausgebildet ist, das Ölvolumen (38) wahlweise zu befüllen oder abzulassen;
einen Ausgangsdurchgang (60), der getrennt und verschieden von dem Behälterdurchgang (44) ist; und
eine Trennwand (72), die sich von der ersten Gehäusewand (64) in Richtung der zweiten Gehäusewand (66) und zwischen dem Behälterdurchgang (44) und dem Ausgangsdurchgang (60) in das Innere des Gehäuses (36) erstreckt;
wobei, wenn sich der Schmierstoffbehälter (34) in einer ersten normalen Betriebsausrichtung befindet, der Schmierstoffbehälter (34) mittels Öl befüllt wird, das durch den Behälterdurchgang (44) von einem ersten Gehäuseende strömt; und
wobei bei Betrieb in einer Negativ-G-Ausrichtung der Schmierstoffbehälter (34) mittels Öl abgelassen wird, das durch den Behälterdurchgang (44) und aus einem zweiten Gehäuseende strömt.

2. Schmiersystem nach Anspruch 1, wobei, wenn sich der Schmierstoffbehälter (34) in der zweiten Ausrichtung befindet, die Ölströmung (38) aus dem Schmierstoffbehälter (34) über den Ausgangsdurchgang (60) gestoppt wird.

3. Schmiersystem nach Anspruch 1 oder 2, wobei der eine oder die mehreren Seitendurchgänge (46, 48) mindestens zwei Seitendurchgänge ist, und
ein erster Seitendurchgang (46) der mindestens zwei Seitendurchgänge eine erste Querschnittsfläche aufweist, die größer als eine zweite Querschnittsfläche eines zweiten Seitendurchgangs (48) der mindestens zwei Seitendurchgänge ist.

4. Schmiersystem nach Anspruch 1, 2 oder 3, wobei sich der Ausgangsdurchgang (60) von einer Seitenwand (62) des Gehäuses (36) zwischen der ersten Gehäusewand (64) und der zweiten Gehäusewand (66) erstreckt.

5. Schmiersystem nach einem der vorhergehenden Ansprüche, ferner umfassend einen Segelstellungsdurchgang (68), der sich in den Schmierstoffbehälter (34) erstreckt.

6. Schmiersystem nach Anspruch 5, ferner umfassend eine Segelstellungspumpe (70), die mit dem Segelstellungsdurchgang (68) wirkverbunden ist, um Öl (38) aus dem Schmierstoffbehälter (34) über den Segelstellungsdurchgang (68) zu drängen.

7. Schmiersystem nach einem der vorhergehenden Ansprüche, ferner umfassend eine Hauptpumpe (42), die mit dem Behälterdurchgang (44) wirkverbunden ist, um eine Strömung durch den Behälterdurchgang (44) zu drängen.

8. Untersetzungsgetriebesystem eines Gasturbinentriebwerks (10), umfassend:
ein Untersetzungsgetriebe, das ein oder mehrere Gleitlager (50) darin aufweist; und
das Schmiersystem nach einem der vorhergehenden Ansprüche, wobei der Schmierstoffbehälter (34) dazu ausgebildet ist, eine Ölströmung (38) zu dem Untersetzungsgetriebe (26) bereitzustellen, der Behälterdurchgang (44) dazu ausgebildet ist, die Ölströmung (38) zu dem einen oder den mehreren Gleitlagern (50) bereitzustellen, und der Ausgangsdurchgang (60) sich von dem Gehäuse (36) erstreckt und getrennt und verschieden von dem Behälterdurchgang (44) ist.

9. Gasturbinentriebwerk (10), umfassend:
eine Turbinenwelle;
einen Propeller (30), der eine Mehrzahl von Propellerblättern (110) umfasst, wobei der Propeller (30) von einer Propellerwelle angetrieben wird;
ein Untersetzungsgetriebe (26), das die Turbinenwelle mit der Propellerwelle wirkverbindet;
das Schmiersystem nach einem der Ansprüche 1 bis 7, wobei der Schmierstoffbehälter (34) dazu ausgebildet ist, eine Ölströmung (38) zu dem Untersetzungsgetriebe (26) bereitzustellen, der Behälterdurchgang (44) dazu ausgebildet ist, die Ölströmung (38) zu einem oder mehreren Gleitlagern (50) des Untersetzungsgetriebes (26) bereitzustellen, und der Ausgangsdurchgang (60) sich von dem Gehäuse (36) erstreckt und getrennt und verschieden von dem Behälterdurchgang (44) ist.

10. Gasturbinentriebwerk (10) nach Anspruch 9, ferner umfassend einen Segelstellungsdurchgang (68), der sich in den Schmierstoffbehälter (34) erstreckt, wobei der Segelstellungsdurchgang (68) dazu ausgebildet ist, eine Ölströmung (38) zum Einstellen einer Drehstellung der Mehrzahl von Propellerblättern (110) zu liefern.

## Revendications

1. Système de lubrification d'un moteur à turbine à gaz (10), comprenant :
un réservoir de lubrifiant (34) comportant un logement (36) ayant un volume d'huile (38) disposé à l'intérieur ;
un passage de réservoir (44) s'étendant à travers le logement (36) d'une première paroi de logement (64) à une seconde paroi de logement (66) opposée à la première paroi de logement (64) ;
un ou plusieurs passages latéraux (46, 48) s'étendant du passage de réservoir (44) dans un intérieur du logement (36) configurés pour remplir ou vider de manière sélectionnable le volume d'huile (38) ;
un passage de sortie (60) séparé et distinct du passage de réservoir (44) ; et
une paroi de séparateur (72) s'étendant dans l'intérieur du logement (36) de la première paroi de logement (64) vers la seconde paroi de logement (66) et entre le passage de réservoir (44) et le passage de sortie (60) ;
dans lequel, lorsque le réservoir de lubrifiant (34) est dans une première orientation de fonctionnement normale, le réservoir de lubrifiant (34) est rempli par l'intermédiaire de l'huile s'écoulant à travers le passage de réservoir (44) d'une première extrémité de logement ; et
dans lequel, lorsqu'il est amené à fonctionner dans une orientation G négative, le réservoir de lubrifiant (34) est vidé par l'intermédiaire de l'huile s'écoulant à travers le passage de réservoir (44) et à l'extérieur d'une seconde extrémité de logement.

2. Système de lubrification selon la revendication 1, dans lequel, lorsque le réservoir de lubrifiant (34) est dans la seconde orientation, l'écoulement d'huile (38) sortant du réservoir de lubrifiant (34) par l'intermédiaire du passage de sortie (60) est arrêté.

3. Système de lubrification selon la revendication 1 ou 2, dans lequel les un ou plusieurs passages latéraux (46, 48) sont au moins deux passages latéraux, et
un premier passage latéral (46) des au moins deux passages latéraux a une première aire en section transversale supérieure à une seconde aire en section transversale d'un second passage latéral (48) des au moins deux passages latéraux.

4. Système de lubrification selon la revendication 1, 2 ou 3, dans lequel le passage de sortie (60) s'étend d'une paroi latérale (62) du logement (36) entre la première paroi de logement (64) et la seconde paroi de logement (66).

5. Système de lubrification selon une quelconque revendication précédente, comprenant en outre un passage de mise en drapeau (68) s'étendant dans le réservoir de lubrifiant (34).

6. Système de lubrification selon la revendication 5, comprenant en outre une pompe de mise en drapeau (70) reliée de manière fonctionnelle au passage de mise en drapeau (68) pour pousser l'huile (38) du réservoir de lubrifiant (34) par l'intermédiaire du passage de mise en drapeau (68).

7. Système de lubrification selon une quelconque revendication précédente, comprenant en outre une pompe principale (42) reliée de manière fonctionnelle au passage de réservoir (44) pour pousser l'écoulement à travers le passage de réservoir (44).

8. Système de réducteur de vitesse d'un moteur à turbine à gaz (10), comprenant :
un réducteur de vitesse ayant un ou plusieurs paliers lisses (50) à l'intérieur ; et
le système de lubrification selon une quelconque revendication précédente, le réservoir de lubrifiant (34) configuré pour fournir un écoulement d'huile (38) au réducteur de vitesse (26), le passage de réservoir (44) configuré pour fournir l'écoulement d'huile (38) aux un ou plusieurs paliers lisses (50), et le passage de sortie (60) s'étendant du logement (36) séparé et distinct du passage de réservoir (44).

9. Moteur à turbine à gaz (10), comprenant :
un arbre de turbine ;
une hélice (30) comportant une pluralité de pales d'hélice (110), l'hélice (30) étant entraînée par un arbre d'hélice ;
un réducteur de vitesse (26) reliant de manière fonctionnelle l'arbre de turbine à l'arbre d'hélice ;
le système de lubrification selon l'une quelconque des revendications 1 à 7, le réservoir de lubrifiant (34) configuré pour fournir un écoulement d'huile (38) au réducteur de vitesse (26), le passage de réservoir (44) configuré pour fournir l'écoulement d'huile (38) aux un ou plusieurs paliers lisses (50) du réducteur de vitesse (26), et le passage de sortie (60) s'étendant du logement (36) séparé et distinct du passage de réservoir (44).

10. Moteur à turbine à gaz (10) selon la revendication 9, comprenant en outre un passage de mise en drapeau (68) s'étendant dans le réservoir de lubrifiant (34), le passage de mise en drapeau (68) configuré pour délivrer un écoulement d'huile (38) pour le réglage d'une position de rotation de la pluralité de pales d'hélice (110).
